Europäisches Patentamt

European Patent Office

Office européen des brevets

(11) Veröffentlichungsnummer: **0 391 409**
**A1**

## (12) EUROPÄISCHE PATENTANMELDUNG

(21) Anmeldenummer: 90106508.6

(51) Int. Cl.5: **F16L 3/12, H02G 3/26**

(22) Anmeldetag: 05.04.90

(30) Priorität: 06.04.89 DE 3911184

(43) Veröffentlichungstag der Anmeldung:
10.10.90 Patentblatt 90/41

(84) Benannte Vertragsstaaten:
AT BE CH DE DK FR GB IT LI NL SE

(71) Anmelder: **E. Missel GmbH & Co.**
**Hortensienweg 2 und 27**
**D-7000 Stuttgart 50(DE)**

(72) Erfinder: **Schäfer, Wolfgang**
**Endersbacher Strasse 51**
**D-7000 Stuttgart 50(DE)**

(74) Vertreter: **Dipl.-Phys.Dr. Manitz Dipl.-Ing.,**
**Dipl.-W.-Ing. Finsterwald Dipl.-Ing. Grämkow**
**Dipl.-Chem.Dr. Heyn Dipl.-Phys. Rotermund**
**Morgan, B.Sc.(Phys.) Robert-Koch-Strasse 1**
**D-8000 München 22(DE)**

(54) **Vorrichtung zum Befestigen von Installationsleitungen.**

(57) Eine Vorrichtung zum Befestigen von Installationsleitungen, insbesondere von mit Dämmaterial ummantelten Rohren umfaßt einen Befestigungsabschnitt (2) und sich zu dessen beiden Seiten erstreckende erste und zweite Umfassungsteile (6, 8) aus biegsamem Material, wobei das erste Umfassungsteil (6) einen abgewinkelten, zum Befestigungsabschnitt beabstandeten Kuppelabschnitt (12) mit freiem Ende aufweist. Die Länge dieses Kuppelabschnitts (12) entspricht zumindest der Breite des gegenüberliegenden zweiten Umfassungsteils (8), das um den Kuppelabschnitt (12) fixierend faltbar ist. Durch diese Befestigungsvorrichtung wird die Montage der Installationsleitungen vereinfacht und beschleunigt.

Fig. 2

EP 0 391 409 A1

Die Erfindung betrifft eine Vorrichtung zum Befestigen von Installationsleitungen, insbesondere von mit Dämmaterial ummantelten Rohren an Böden, Wänden oder Decken von Gebäuden, mit einem Befestigungsabschnitt und sich zu dessen beiden Seiten erstreckenden ersten und zweiten Umfassungsteilen aus biegsamem Material.

Bei der Montage von Installationsleitungen, wie beispielsweise Elektroinstallationsleitungen, insbesondere jedoch von mit Dämmaterial ummantelten Rohren in Gebäuden ist es von Bedeutung, daß die Befestigung an den Böden, Wänden oder Decken schnell, einfach und sicher durchgeführt werden kann. Als Befestigungsmittel sind dazu Schellen bekannt, di jedoch insbesondere das Erfordernis der schnellen und einfachen Montage nur in ungenügendem Maße erfüllen.

Ferner ist eine aus einem Metallstreifen bestehende Vorrichtung bekannt, welche aus einem am Untergrund zu befestigenden Mittelteil und zwei gegenüberliegenden, vom Mittelteil abstehenden Umfassungsteilen aus biegsamem Material besteht, wobei ein Umfassungsteil aus einem U-förmigen Bügel und das andere Umfassungsteil aus einer länglichen Zunge besteht. Die Befestigung der Rohre mittels dieses bekannten Materialstreifens erfolgt in der Weise, daß zuerst das Mittelteil am Untergrund befestigt wird und dann auf dieses Mittelteil die Installationsleitung aufgelegt wird. Anschließend werden der Bügel und die Zunge von gegenüberliegenden Seiten her um das Rohr herumgebogen und die Zunge in die Aussparung des Bügels eingefädelt. Daraufhin wird die Zunge um den kurzen Querschenkel des U-förmigen Bügels herumgebogen, wodurch die Vorrichtung gespannt und fixiert wird. Dabei hat es sich jedoch gezeigt, daß das Einfädeln der Zunge in die Aussparung des U-förmigen Bügels oft umständlich ist, so daß die Montage nicht mit der gewünschten Schnelligkeit durchgeführt werden kann. Außerdem ist die Herstellung dieser bekannten Befestigungsvorrichtung relativ teuer.

Der Erfindung liegt die Aufgabe zugrunde, eine Befestigungsvorrichtung nach dem Oberbegriff des Anspruchs 1 zu schaffen, die auf einfache und wirtschaftliche Weise hergestellt werden kann und mit der Installationsleitungen, insbesondere mit Dämmaterial ummantelte Rohre schnell, einfach und sicher befestigt werden können.

Diese Aufgabe wird erfindungsgemäß durch die kennzeichnenden Merkmale des Anspruchs 1 gelöst.

Mittels des erfindungsgemäßen Kuppelabschnitts, der ein freies Ende aufweist, ist es auf eine sehr einfache Weise möglich, das zweite, zungenförmig ausgebildete Umfassungsteil mit dem Kuppelabschnitt zu verbinden und um diesen zu falten. Bei diesem Faltvorgang besteht keine Gefahr, daß der Kuppelabschnitt ausgebogen oder abgeknickt wird, da sowohl der Längsabschnitt als auch der Kuppelabschnitt satt mit der Wandung der Installationsleitung zur Anlage kommt und großflächig aufliegt. Auf diese Weise wird der Montagevorgang erheblich vereinfacht und beschleunigt, da das Einfädeln einer Zunge in einen U-förmigen Bügel entfällt, wozu die Zunge erst in einer relativ genauen Weise gebogen und bezüglich des Bügels ausgerichtet werden muß. Ferner ist es möglich, das zweite Umfassungsteil nachträglich vom ersten Umfassungsteil zu lösen, ohne daß das um den Kuppelabschnitt gefaltete Ende des zweiten Umfassungsteils wieder aufgeboben werden muß, da das gefaltete Ende über das freie Ende des Kuppelabschnitts seitlich abgezogen werden kann. Außerdem ist die erfindungsgemäße Befestigungsvorrichtung kostengünstiger herzustellen, da die Herstellung des ersten Umfassungsteils einfacher und mit geringerem Materialaufwand durchzuführen ist.

Gemäß einer vorteilhaften Ausführungsform der Erfindung weist der Kuppelabschnitt in der Nähe seines freien Endes einen das gefaltete zweite Umfassungsteil seitlich führenden Haltvorsprung auf. Dieser Haltevorsprung positioniert das zweite Umfassungsteil bereits während des Spannens in der vorbestimmten Lage auf den Kuppelabschnitt und stellt eine zusätzliche Maßnahme dar, um das Abgleiten des zweiten Umfassungsteils vom Kuppelabschnitt zu verhindern.

Gemäß einer Ausführungsvariante ist der Kuppelabschnitt zwischen dem Befestigungsabschnitt und dem Ende des Längsabschnitts angeordnet. Auf diese Weise wird am Ende des Längsabschnitts eine zusätzliche Grifffläche geschaffen, die das Umbiegen des ersten Umfassungsteils um die Installationsleitung erleichtert.

Die Ausführungsformen nach den Ansprüchen 10 bis 13 sind insbesondere dazu geeignet, mehrere Installationsleitungen nebeneinander auf eine einfache Weise zu befestigen.

Weitere Ausführungsvarianten und vorteilhafte Ausführungsformen der Erfindung sind aus den Unteransprüchen ersichtlich.

Die Erfindung wird nachfolgend beispielsweise anhand der Zeichnung näher erläutert; in dieser zeigt:

 Fig. 1 eine Draufsicht auf die Befestigungsvorrichtung,

 Fig. 2 eine Seitenansicht der Befestigungsvorrichtung nach Fig. 1, wobei die Befestigungsvorrichtung mit durchgezogenen Linien im unmontierten Zustand und mit gestrichelten Linien im montierten Zustand dargestellt ist, und

 Fig. 3 eine Detaildarstellung des Kuppelabschnitts mit dem um diesen umgeschlagenen zweiten Umfassungsteil.

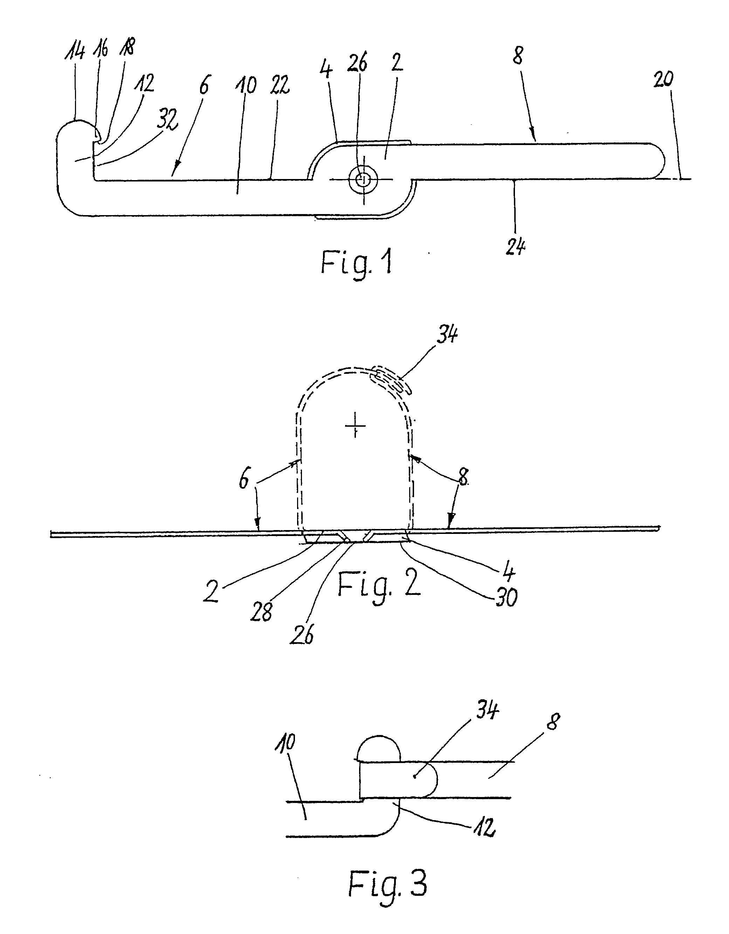

Die in Fig. 1 dargestellte Befestigungsvorrichtung besteht aus einem mittleren Befestigungsabschnitt 2, der mit einem unterhalb des Befestigungsabschnitts angeordneten Befestigungssockel 4 verbunden ist, sowie aus einem ersten Umfassungsteil 6 und einem zweiten Umfassungsteil 8. Beide Umfassungsteile 6, 8 und der Befestigungsabschnitt 2 bestehen aus einem einzigen Aluminiumblechteil, d.h. aus einem Material, das biegsam und dauerhaft verformbar ist. Dieses Aluminiumblechteil kann beispielsweise durch Stanzen hergestellt werden. Der Befestigungssockel 4 kann ebenfalls einstöckig mit der übrigen Vorrichtung ausgeführt sein. Der Befestigungsabschnitt 2 dient zur Befestigung der Vorrichtung an der gewünschten Unterlage, beispielsweise an Böden, Wänden oder Decken von Gebäuden.

Die beiden Umfassungsteile 6, 8 erstrecken sich von beiden Seiten des Befestigungsabschnitts 2 in entgegensetzte Richtungen und verlaufen parallel zueinander. Das erste Umfassungsteil 6 weist anschließend an dem Befestigungsabschnitt 2 einen Längsabschnitt 10 konstanter Breite und an dessen Ende einen Kuppelabschnitt 12 auf, der mit dem Längsabschnitt 10 einen Winkel von 90° einschließt. Der Kuppelabschnitt 12 und der Längsabschnitt 10 befinden sich in der gleichen Ebene.

In der Nähe des freien Endes 14 des Kuppelabschnitts 12 ist ein zum Befestigungsabschnitt 2 hin gerichteter Haltevorsprung 16 mit einer zum Längsabschnitt 10 im wesentlichen parallelen Führungswand 18 vorgesehen. Die Entfernung der Führungswand 18 vom Längsabschnitt 10 ist dabei gleich oder geringfügig größer als die Breite des zweiten Umfassungs teils 8, so daß dieses zwischen der Führungswand 18 und dem Längsabschnitt 10 eingelegt werden kann. Der Haltevorsprung 16 bzw. die Führungswand 18 stellen eine zusätzliche Sicherungsmaßnahme dar, um zu verhindern, daß das zweite Umfassungsteil 8 beim Spannen bzw. nach dem Spannvorgang über das freie Ende 14 des Kuppelabschnitts 12 abgleiten kann. Es ist auch möglich, daß die Führungswand 18 nicht parallel, sondern in einem gewissen Winkel zum Längsabschnitt 10 verläuft, so daß eine Hinterschneidung im Bereich des Haltevorsprungs 16 gebildet wird. Die Breite des Kuppelabschnitts 12 ist gleich der Breite des Längsabschnitts 10.

Das zweite Umfassungsteil 8 ist gerade ausgebildet und weist die gleiche Breite wie der Längsabschnitt 10 auf. Die Länge des zweiten Umfassungsteils 8 beträgt etwa 115 % der Länge des Längsabschnitts 10.

Beide Umfassungsteile 6, 8 sind bezüglich ihrer Längsachse 20 versetzt angeordnet, und zwar so, daß die Innenseite 22 des ersten Umfassungsteils und die Innenseite 24 des zweiten Umfassungsteils auf der Längsachse 20 liegen. Dadurch wird erreicht, daß beim Umschlagen der Umfassungsteile um die zu befestigende Installationsleitung diese dicht nebeneinander zu liegen kommen, so daß das beim Spannen der Befestigungsvorrichtung auftretende Biegemoment auf den Kuppelabschnitt 12 möglichst klein gehalten wird.

In der Mitte des Befestigungsabschnitts 2 befindet sich eine Durchgangsöffnung 26 zur Aufnahme eines Befestigungsmittels, beispielsweise einer Schraube. Mit Hilfe dieses Befestigungsmittels wird der Befestigungsabschnitt 2 auf der dafür vorgesehenen Unterlage gehaltert. Die Durchgangsöffnung 26 kann auf einer durch Bohren oder Stanzen hergestellten Öffnung bestehen, es ist jedoch auch möglich, daß die Randbereiche der Durchgangsöffnung 26 nach unten abgedrückt werden, wie in Fig. 2 dargestellt ist. Dadurch wird eine Vertiefung für die Aufnahme des Kopfes des Befestigungsmittels, beispielsweise einer Senkkopfschraube geschaffen, so daß das Befestigungsmittel nicht mehr über die Oberfläche des Befestigungsabschnitts 2 hinausragt. Die Randbereiche 28 können dabei bis zum unteren Rand 30 des Befestigungssockels 4 abgebogen werden.

Aus Fig. 2 ist weiterhin gestrichelt die Befestigungsvorrichtung im montierten Zustand ersichtlich. Die Montage erfolgt dabei in der Weise, daß zuerst der Befestigungsabschnitt 2 mit dem Befestigungssockel 4 auf der dazu vorgesehenen Unterlage mit Hilfe eines nicht dargestellten, die Durchgangsöffnung 26 durchsetzenden Befestigungsmittels festgelegt wird. Die Umfassungsteile 6, 8 erstrecken sich noch parallel zur Unterlage (s. durchgezogene Linien in Fig. 2). Anschließend wird die Installationsleitung, beispielsweise ein mit Dämmaterial ummanteltes Rohr auf den Befestigungsabschnitt 2 gelegt oder gedrückt und sowohl das zweite Umfassungsteil 8 als auch nachfolgend das erste Umfassungsteil 6 um diese Installationsleitung herumgebogen (siehe gestrichelte Linien in Fig. 2),so daß sich das zweite Umfassungsteil 8 unterhalb des Kuppelabschnitts 12 befindet. Anschließend wird das zweite Umfassungsteil 8 um eine Wand 32 des Kupplungsabschnitts 12 herumgebogen und gefaltet, so daß der Endbereich 34 des zweiten Umfassungsteils 8 auf dem Kuppelabschnitt 12 aufliegt. Dieser Zustand ist in Fig. 3 in einer Draufsicht gezeigt.

Aufgrund der Materialeigenschaften vom Aluminium bleibt die Verbindung zwischen dem ersten Umfassungsteil 6 und dem zweiten Umfassungsteil 8 nach dem Umfalten des Endbereichs 34 um den Kuppelabschnitt 12 erhalten. Es ist jedoch auch möglich, für die Befestigungsvorrichtung andere Materialien zu verwenden, die eine leichte und dauerhafte Verformung bei ausreichender Festigkeit gewährleisten. Weiterhin ist es möglich, den Kuppelabschnitt 12 nicht einteilig mit dem Längsabschnitt 10 auszubilden, sondern dafür getrennte Teile zu verwenden, die auch aus verschiedenen Materialien bestehen können. In der gleichen Weise können das erste Umfassungsteil 6, das zweite Umfassungsteil 8 und der Befestigungsabschnitt 12 aus getrennten Teilen bestehen.

## Ansprüche

1. Vorrichtung zum Befestigen von Installationsleitungen, insbesondere von mit Dämmaterial ummantelten Rohren an Böden, Wänden, oder Decken von Gebäuden, mit einem Befestigungsabschnitt und sich zu dessen beiden Seiten erstreckenden ersten und zweiten Umfassungsteilen aus biegsamem Material,
dadurch **gekennzeichnet**, daß das erste Umfassungsteil (6) einen Längsabschnitt (10) und einen zu diesem abgewinkelten, zum Befestigungsabschnitt (2) beabstandeten Kuppelabschnitt (12) mit freiem Ende (14) aufweist, dessen Länge zumindest der Breite des gegenüberliegenden zweiten Umfassungsteils (8) entspricht und um den dieses zweite Umfassungsteil (8) fixierend faltbar ist.

2. Vorrichtung nach Anspruch 1,
dadurch **gekennzeichnet**, daß
der Kuppelabschnitt (12) in der Nähe seines freien Endes (14) einen das gefaltete zweite Umfassungsteil (8) seitlich führenden Haltevorsprung (16) aufweist.

3. Vorrichtung nach Anspruch 2,
dadurch **gekennzeichnet**, daß
der Haltevorsprung (16) eine zur Längsachse (20) parallele Führungswand (18) für das zweite Umfassungsteil (8) aufweist.

4. Vorrichtung nach Anspruch 3,
dadurch **gekennzeichnet**, daß
der Haltevorsprung (16) eine zur Längsachse (20) schräg verlaufende, eine Hinterschneidung bildende Führungswand (18) für das zweite Umfassungsteil (8) aufweist.

5. Vorrichtung nach einem der vorhergehenden Ansprüche,
dadurch **gekennzeichnet**, daß
der Kuppelabschnitt (12) am Ende des Längsabschnitts (10) angeordnet ist.

6. Vorrichtung nach einem der Ansprüche 1 bis 4,
dadurch **gekennzeichnet**, daß
der Kuppelabschnitt (12) zwischen dem Befestigungsabschnitt (2) und dem Ende des Längsabschnitts (10) angeordnet ist.

7. Vorrichtung nach Anspruch 5,
dadurch **gekennzeichnet**, daß
der Kuppelabschnitt (12) aus einem abgebogenen Ende des Längsabschnitts (10) besteht.

8. Vorrichtung nach einem der Ansprüche 1 bis 6,
dadurch **gekennzeichnet**, daß
das erste Umfassungsteil (6) mehrere, insbesondere zwei Kuppelabschnitte (12) aufweist, die auf derselben Seite des Längsabschnitts (10) angeordnet sind.

9. Vorrichtung nach einem der Ansprüche 1 bis 6,
dadurch **gekennzeichnet**, daß
das erste Umfassungsteil (6) mehrere, insbesondere zwei Kuppelabschnitte (12) aufweist, die auf gegenüberliegenden Seiten des Längsabschnitts (10) und in gleichem Abstand zum Befestigungsabschnitt (2), vorzugsweise am Ende des Längsabschnitts (10) angeordnet sind, und daß zwei parallel verlaufende zweite Umfassungsteile (8) vorgesehen sind, die um die jeweils gegenüberliegenden Kuppelabschnitte (12) faltbar sind.

10. Vorrichtung nach einem der vorhergehenden Ansprüche,
dadurch **gekennzeichnet**, daß
die Vorrichtung mehrere, insbesondere zwei erste und/oder zweite Umfassungsteile (6,8) aufweist.

11. Vorrichtung nach Anspruch 10,
dadurch **gekennzeichnet**, daß
die ersten Umfassungsteile (6) auf derselben Seite des Befestigungsabschnitts (2) und die zweiten Umfassungsteile (8) auf der gegenüberliegenden Seite des Befestigungsabschnitts (2) angeordnet sind.

12. Vorrichtung nach Anspruch 10,
dadurch **gekennzeichnet**, daß
auf derselben Seite des Befestigungsabschnitts (2) neben dem ersten Umfassungsteil (6) eines Paares von Umfassungsteilen (6,8) das zweite Umfassungsteil (8) eines weiteren Paares von Umfassungsteilen angeordnet ist.

13. Vorrichtung nach Anspruch 10,
dadurch **gekennzeichnet**, daß
die Vorrichtung zwei erste Umfassungsteile (6) und ein zweites Umfassungsteil (8) aufweist.

14. Vorrichtung nach einem der vorhergehenden Ansprüche,
dadurch **gekennzeichnet**, daß
das zweite Umfassungsteil (8) am Befestigungsabschnitt (2) insbesondere um die Breite des Längsabschnitts (10) gegenüber diesem versetzt angeordnet ist.

15. Vorrichtung nach einem der vorhergehenden Ansprüche,
dadurch **gekennzeichnet**, daß
das zweite Umfassungsteil (8) länger als der Längsabschnitt (10) des ersten Umfassungsteils (6) ist.

16. Vorrichtung nach einem der vorhergehenden Ansprüche,
dadurch **gekennzeichnet**, daß
der Befestigungsabschnitt (2) mindestens eine Durchgangsöffnung (26) zur Aufnahme eines Befestigungsmittels, beispielsweise einer Schraube, aufweist.

17. Vorrichtung nach einem der vorhergehenden Ansprüche,
dadurch **gekennzeichnet**, daß
das erste und zweite Umfassungsteil (6, 8) und der Befestigungsabschnitt (2) einteilig ausgeführt sind und vorzugsweise aus einem Stanzteil bestehen.

18. Vorrichtung nach einem der Ansprüche 1 bis 17,
dadurch **gekennzeichnet**, daß
das erste und zweite Umfassungsteil (6, 8), der Befestigungsabschnitt (2) und der Kuppelabschnitt (12) einteilig ausgeführt sind und vorzugsweise aus einem Stanzteil bestehen.

19. Vorrichtung nach einem der vorhergehenden Ansprüche,
dadurch **gekennzeichnet**, daß
der Längsabschnitt (10) und der Kuppelabschnitt (12) des ersten Umfassungsteils (6) und das zweite Umfassungsteil (8) die gleiche Breite aufweisen.

20. Vorrichtung nach einem der vorhergehenden Ansprüche,
dadurch **gekennzeichnet**, daß
mit dem Befestigungsabschnitt (2) ein Befestigungssockel (4) verbunden ist.

21. Vorrichtung nach Anspruch 20,
dadurch **gekennzeichnet**, daß
der Randbereich (28) der Durchgangsöffnung (26) in einen Hohlraum des Befestigungssockels (4) hinein abgebogen ist.

22. Vorrichtung nach einem der vorhergehenden Ansprüche,
dadurch **gekennzeichnet**, daß
der Kuppelabschnitt (12) in einem Winkel von 90° zum Längsabschnitt (10) angeordnet ist.

23. Vorrichtung nach einem der vorhergehenden Ansprüche,
dadurch **gekennzeichnet**, daß
das erste und zweite Umfassungsteil (6, 8) und der Befestigungsabschnitt (2) aus einem Aluminiumblech bestehen.

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | GB-A-154295 (SCHOLES)<br>* Seite 2, Zeilen 80 - 89; Figuren *<br>--- | 1 | F16L3/12<br>H02G3/26 |
| A | US-A-2580231 (LAMM)<br>* Spalte 3, Zeilen 44 - 54; Figuren 4, 6-6a *<br>--- | 1 | |
| A | GB-A-2105401 (FORD)<br>* Zusammenfassung; Figuren *<br>----- - | 1 | |

RECHERCHIERTE SACHGEBIETE (Int. Cl.5 )

F16L
H02G

Der vorliegende Recherchenbericht wurde für alle Patentansprüche erstellt

| Recherchenort | Abschlußdatum der Recherche | Prüfer |
|---|---|---|
| DEN HAAG | 11 JULI 1990 | NARMINIO A. |

EPO FORM 1503 03.82 (P0403)